**Europäisches Patentamt**

**European Patent Office**

**Office européen des brevets**

(11) Veröffentlichungsnummer: **0 004 057**
**B1**

(12) **EUROPÄISCHE PATENTSCHRIFT**

(45) Veröffentlichungstag der Patentschrift:
**25.11.81**

(21) Anmeldenummer: **79100656.2**

(22) Anmeldetag: **05.03.79**

(51) Int. Cl.³: **E 03 B 11/08, G 05 D 16/06**

(54) Druckwindkessel für eine druckgeregelte Wasserversorgungsanlage.

(30) Priorität: **13.03.78 DE 2810882**

(43) Veröffentlichungstag der Anmeldung:
**19.09.79 Patentblatt 79/19**

(45) Bekanntmachung des Hinweises auf die Patenterteilung:
**25.11.81 Patentblatt 81/47**

(84) Benannte Vertragsstaaten:
**BE CH FR GB IT NL SE**

(56) Entgegenhaltungen:
**DE-B-1 146 007**
**DE-C-962 769**
**FR-A-1 493 719**
**GB-A-1 097 326**
**US-A-2 533 428**

(73) Patentinhaber: **SIEMENS AKTIENGESELLSCHAFT Berlin und München, Postfach 22 02 61, D-8000 München 22 (DE)**

(72) Erfinder: **Schönwald, Siegfried, Burgstrasse 18, D-8740 Bad Neustadt (DE)**
Erfinder: **Breyer, Eberhard, St.-Brunno-Strasse 9,. D-8740 Bad Neustadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Druckwindkessel für eine druckgeregelte Wasserversorgungsanlage

Die Erfindung betrifft einen Druckwindkessel für eine druckgeregelte Wasserversorgungsanlage, bei dem im Kesselinnern mittels einer elastischen Membran ein mit Luft gefüllter Raum gegenüber dem Wasser abgegrenzt ist, wobei die Membran mit ihrem Rand über den Rand eines formsteifen, korbartig ausgebildeten Einsatzteiles gestülpt ist, welches den übergestülpten Rand zwischen sich und einer Durchmesserverengung des Kessels anpreßt.

Ein solcher Druckwindkessel ist durch die FR-A-1 493 719 bekannt. Beim Einbringen des Einsatzteiles trifft der übergestülpte Rand der Membran auf die Innenwand des Kessels. Da zwischen dem elastischen Material der Membran und der Kesselwand eine starke Haftung besteht ist, ein hoher Kraftaufwand notwendig, um das Einsatzteil mit der aufgestülpten Membran in seine endgültige Einbaulage zu bringen. Die hohen Haftkräfte führen außerdem zu einer starken Dehnung des übergestülpten Membranrandes, wodurch Risse in dem Rand entstehen können, die dann die Ursache für Undichtigkeiten zwischen den beiden durch die Membran abgetrennten Räumen sind.

Der Erfindung liegt die Aufgabe zugrunde, einen Druckwindkessel so auszubilden, daß eine starke Haftreibung zwischen der Kesselinnenwand und dem übergestülpten Membranrand vermieden wird.

Die Lösung der gestellten Aufgabe gelingt nach der Erfindung dadurch, daß auf den übergestülpten Rand der Membran eine Rundschnurdichtung aufgesteckt und in ihrer Einbaulage durch einen an dem Einsatzteil vorgesehenen umlaufenden Abstützrand gesichert ist.

Eine solche Rundschnurdichtung wird in entsprechendem Abstand zur endgültigen Lage auf den umgestülpten Rand der Membran aufgesteckt. Beim Einbringen des Einsatzteiles rollt die Rundschnurdichtung im Bereich der Durchmesserverengung an der Kesselinnenwand und dem umgestülpten Membranrand ab. Durch dieses Abrollen wird sowohl das Einbringen des Einsatzteiles erleichtert als auch eine starke Beanspruchung des Membranrandes auf Dehnung vermieden. Bei fehlendem Flüssigkeitsdruck wird die Rundschnurdichtung durch den Abstützrand in ihrer Lage gesichert.

Anhand eines in der Zeichnung dargestellten Ausführungsbeispiels wird der Anmeldungsgegenstand nachfolgend näher beschrieben. Es zeigt

Fig. 1 einen kompletten Druckwindkessel,

Fig. 2 und 3 vergrößerte Detailausschnitte der Fig. 1.

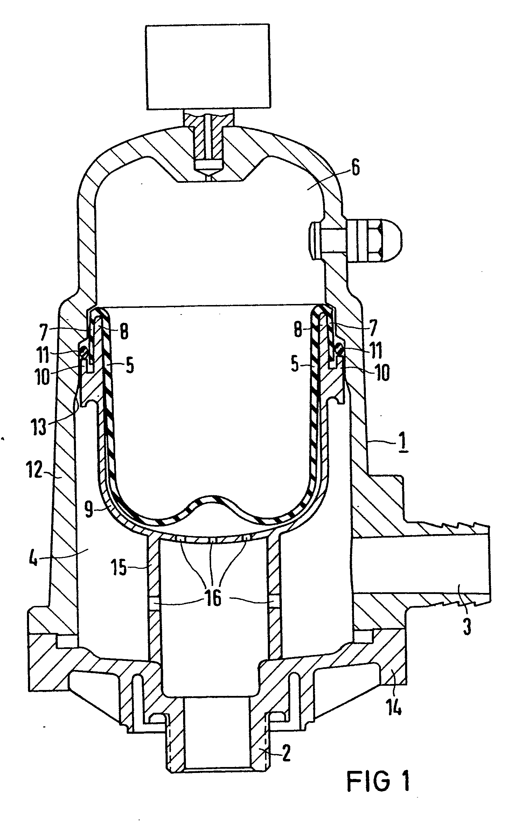

Der in Fig. 1 dargestellte Druckwindkessel 1 besitzt einen Einlaßstutzen 2 und einen Auslaßstutzen 3. Der Einlaßstutzen 2 wird mit einer von einer Förderpumpe kommenden Zuleitung und der Auslaßstutzen 3 mit einer zum Verbraucher führenden Entnahmeleitung verbunden. Der zwischen dem Einlaßstutzen 2 und dem Auslaßstutzen 3 liegende Raum 4 wird hierbei mit Wasser gefüllt. Der Raum 4 ist durch eine Membran 5 gegenüber einem mit Luft gefüllten Raum 6 abgegrenzt. Die Membran 5 ist mit ihrem Rand 7 über den Rand 8 eines korbartigen Einsatzteiles 9 gestülpt. An dem Einsatzteil 9 ist ein umlaufender Abstützrand 10 ausgebildet, auf dem als Dichtung eine Rundschnurdichtung 11 aufliegt. Im Bereich der Endstellung des Einsatzteiles 9 ist am Gehäuse 12 des Druckwindkessels 1 ein Absatz 13 ausgebildet, durch den eine Durchmesserverengung des Druckwindkessels erreicht wird. Das Gehäuse 12 des Druckwindkessels 1 ist durch einen Gehäusedeckel 14, der den Einlaßstutzen 2 trägt, verschlossen. Am Boden des korbartigen Einsatzteiles 9 ist ein Abstützring 15 angeformt, über den das Einsatzteil 9 am Gehäusedeckel 14 abgestützt und somit in seiner Lage gegenüber dem Gehäuse 12 gehalten wird. Im Boden des Einsatzteiles 9 und in dem Abstützring 15 sind Durchlaßöffnungen 16 vorgesehen, durch die Wasser hindurchtreten kann.

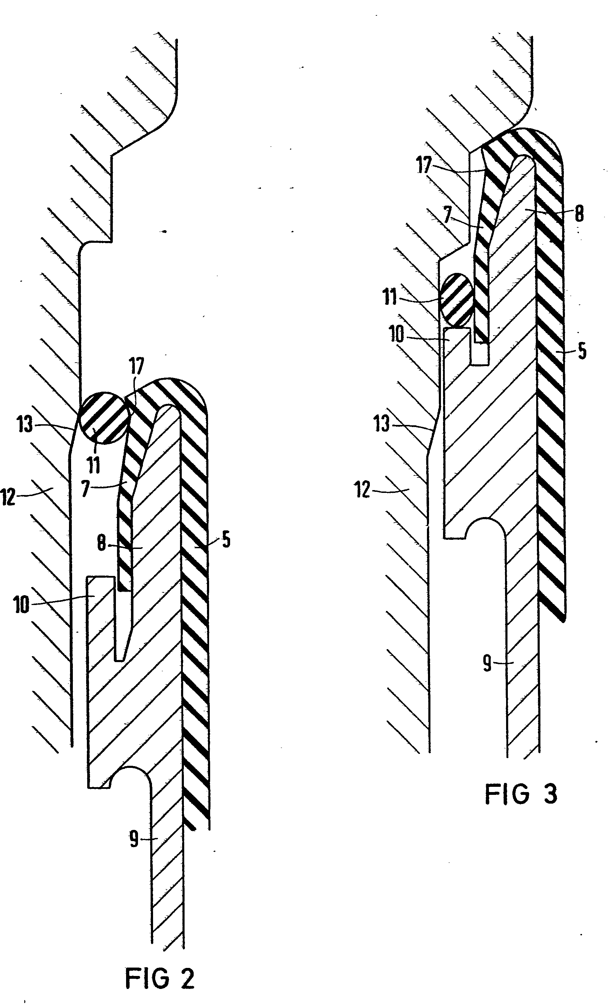

Das Einbringen des Einsatzteiles 9 wird anhand der Fig. 2 und 3 beschrieben. Zunächst wird außerhalb des Druckwindkessels 1 die Membran 5 mit ihrem Rand 7 über den Rand 8 des Einsatzteiles 9 gestülpt. Anschließend wird die Rundschnurdichtung 11 in eine am Rand 7 der Membran 5 vorgesehene Einschnürung 17 eingelegt. Durch diese Einschnürung 17 ist gleichzeitig die richtige Lage für die Rundschnurdichtung 11 gegeben. Beim Hineinschieben des Einsatzteiles 9 in den Druckwindkessel trifft die Rundschnurdichtung 11 auf den Absatz 13 des Druckwindkessels. Infolge der durch diesen Absatz 13 bedingten Durchmesserverengung des Druckwindkessels preßt sich die Rundschnurdichtung 11 an die Wand des Druckwindkessels an und beginnt abzurollen. Gleichzeitig wird die Rundschnurdichtung 11 zusammengepreßt und dichtet somit den mit Luft gefüllten Raum 6 gegenüber dem mit Wasser gefüllten Raum 4 ab. In der Endstellung des Einsatzteiles 9 liegt die Rundschnurdichtung 11 auf dem Abstützrand 10 auf und wird durch diesen in ihrer Lage gesichert. Die Rundschnurdichtung 11 kann somit bei fehlendem Wasserdruck nicht durch den im Raum 6 herrschenden Luftdruck herausgedrückt werden.

Bei starkem Absinken des Wasserdruckes legt sich die Membran 5 infolge des Luftdruckes an den Wänden des korbartigen Einsatzteiles 9 an. Das korbartige Einsatzteil 9 übernimmt somit die Druckkräfte des Luftpolsters.

**Patentanspruch**

Druckwindkessel für eine druckgeregelte Wasserversorgungsanlage, bei dem im Kesselinnern mittels einer elastischen Membran (5) ein mit Luft gefüllter Raum (6) gegenüber dem Wasser abgegrenzt ist, wobei die Membran (5) mit ihrem Rand (7) über den Rand (8) eines formsteifen, korbartig ausgebildeten Einsatzteiles (9) gestülpt ist, welches den übergestülpten Rand zwischen sich und einer Durchmesserverengung des Kessels anpreßt, dadurch gekennzeichnet, daß auf den übergestülpten Rand (7) der Membran (5) eine Rundschnurdichtung (11) aufgesteckt und in ihrer Einbaulage durch einen an dem Einsatzteil (9) vorgesehenen umlaufenden Abstützrand (10) gesichert ist.

## Claim

A compressed-air chamber for a pressure-regulated water supply system, wherein in the interior of the chamber, a space (6) filled with air is separated from the water by means of an elastic diaphragm (5), the edge (7) of the diaphragm (5) is turned over the edge (8) of a rigidly-shaped basket-like insert (9), which presses the turned-over edge between itself and a diametric constriction of the chamber, characterised in that a sealing ring (11) is placed on the turned-over edge (7) of the diaphragm (5) and secured in its installed position by a peripheral supporting edge (10) which is provided on the insert (9).

## Revendication

Réservoir à air comprimé pour une installation de distribution d'eau, régulée par la pression, dans lequel, à l'intérieur du réservoir, une chambre (6) remplie d'air est séparée de l'eau à l'aide d'une membrane élastique (5) dont le bord (7) est replié sur le bord (8) d'une pièce d'insertion (9) rigide et se présentant sous la forme d'un panier, le bord replié de la membrane élastique étant serré entre ladite pièce d'insertion et une partie de diamètre réduit du réservoir, caractérisé par le fait que sur le bord replié (7) de la membrane est monté un joint torique (11) dont la position de montage est assurée au moyen d'un bord d'appui (10) périphérique prévu sur la pièce d'insertion.

FIG 1

FIG 2

FIG 3